# EUROPÄISCHE PATENTSCHRIFT

(11) **EP 0 273 129 B1**
(45) Veröffentlichungstag und Bekanntmachung des Hinweises auf die Patenterteilung: **10.03.1993**
(21) Anmeldenummer: 87115730.1
(22) Anmeldetag: 27.10.1987
(51) Int. Cl.: G01R 33/06

(54) **Magnetfeldgeber**
Magnetic field sensor
Capteur de champs magnétiques

(30) Priorität: 12.11.1986 DE 3638622
(43) Veröffentlichungstag der Anmeldung: 06.07.1988
(73) Patentinhaber: Mannesmann Kienzle GmbH (HR B1220), 78052 Villingen-Schwenningen (DE)
(72) Erfinder: Werner, Thomas, Dipl.-Ing., D-7710 Donaueschingen (DE)

(56) Entgegenhaltungen:
- DE-A- 2 745 880

## Beschreibung

Die Erfindung betrifft einen Magnetfeldgeber mit einem Permanentmagneten und einem Hallgenerator.

Bei Maschinen und Fahrzeugen werden für das Erkennen von Drehbewegungen bzw. für das Erfassen von Drehzahlen in der Regel stabförmige Induktionsgeber verwendet. Diese wirken zur Signalerzeugung mit geeigneten mit dem Meßobjekt verbundenen, ferromagnetischen Taktscheiben oder Zahnrädern zusammen, denen sie durch Einschrauben in das betreffende Lager- oder Getriebegehäuse zugeordnet werden.

Die Vorzüge von Induktionsgebern sind insbesondere darin zu sehen, daß sie aufgrund ihrer Robustheit in besonderer Weise dem herrschenden Einsatzmilieu mit Temperaturschwankungen zwischen -4o° und + 15o° C angepaßt sind und verhältnismäßig preisgünstig hergestellt werden können. Hinzu kommt, daß die Tatsache, daß Induktionsgeber dem Meßobjekt Energie entziehen, im genannten Anwendungsfalle vernachlässigbar ist.

Als dynamisch wirkende Geber sind jedoch Induktionsgeber dann nur noch bedingt oder überhaupt nicht mehr brauchbar, wenn relativ niedrige Drehzahlen oder die Bewegung von Wellen im Stillstandsbereich erfaßt werden sollen. Wird, um dementsprechend eine niedrige Grenzfrequenz zu erzielen, die Empfindlichkeit eines solchen Gebers gesteigert, so besteht die Gefahr, insbesondere in Kraftfahrzeugen, wo Geber den verschiedensten Schwingungen ausgesetzt sind, daß beispielsweise auch bei Stillstand des Meßobjekts Signale erzeugt und somit ein Zustand vorgetäuscht wird, der tatsächlich nicht gegeben ist.

Soll die Forderung nach einer Grenzfrequenz Null erfüllt und gleichzeitig das vorstehend beschriebene Problem vermieden werden, so ist es naheliegend, statische Geber, beispielsweise Abreißoszillatoren oder Magnetfeldgeber, die Feldplatten- oder Hallgeneratoren als aktive Elemente aufweisen, zu verwenden. Dabei sind Abreißoszillatoren für den vorgesehenen Anwendungsfall nur bedingt einsetzbar, da einerseits Frequenzen über 500 Hz nicht mehr mit der erforderlichen Sicherheit erfaßt werden können, andererseits im oberen Temperaturbereich erhebliche Störungen durch Veränderungen der Spulenwerte auftreten.

Mit Magnetfeldgebern lassen sich derartige Mängel bekanntlich vermeiden. Die erforderliche Gleichspannungsverstärkung bedingt jedoch eine erhebliche und nur mit einem hohen schaltungstechnischen Aufwand beherrschbare Abhängigkeit der beispielsweise von einem Hallgenerator gelieferten Signale vom gegebenen Störspannungspegel und von dessen alterungs- und temperaturbedingten Veränderungen sowie von dem temperaturabhängigen Driftverhalten des Gleichspannungsverstärkers selbst. Die für den Anwendungsfall erforderliche stabförmige Geberarchitektur schafft jedoch in dieser Beziehung besondere Probleme. Sie bedingt, daß der Hallgenerator an der Stirnseite eines stabförmigen Permanentmagneten angeordnet wird, wodurch unvermeidlich ein gegenüber dem erzielbaren Nutzsignal relativ hohes und aufgrund der Beschaltung des Hallgenerators temperaturabhängiges Grund- bzw. Störsignal bereits primär gegeben ist und nachfolgend verstärkt wird.

Ausgehend von dem meßtechnischen Grundsatz, daß der einem Geber nachgeschaltete Verstärker im wesentlichen nur Nutzsignale verstärken soll, war der vorliegenden Erfindung die Aufgabe gestellt, die meßtechnischen Voraussetzungen eines vorzugsweise stabförmigen Magnetfeldgebers zu verbessern, insbesondere ein möglichst hohes Nutz-/Störsignal-Verhältnis zu schaffen.

Die Lösung dieser Aufgabe sieht vor, daß als Permanentmagnet ein Ringmagnet vorgesehen ist und daß der Hallgenerator der Öffnung des Ringmagneten derart zugeordnet ist, daß die Achse des Hallgenerators und die Achse des Ringmagneten im wesentlichen zusammenfallen und der Hallgenerator bei offenem Magnetkreis in einem durch Feldverdrängung innerhalb des Ringmagneten gegebenen Raum minimaler magnetischer Induktion angeordnet ist.

Ein Magnetfeldgeber gemäß dem Oberbegriff des Anspruchs 1 ist aus der DE-A-2 745 880 bekannt.

Ein bevorzugtes Ausführungsbeispiel der Erfindung ist dadurch gekennzeichnet, daß an einer die elektrischen Bauelemente des Gebers tragenden Leiterplatte ein in die Öffnung des Ringmagneten einführbarer Ansatz ausgebildet ist, daß der Hallgenerator stirnseitig an dem in den Ringmagneten eingreifenden Ansatz der Leiterplatte angeordnet ist und daß der Ringmagnet auf dem Ansatz der Leiterplatte fixiert ist.

Außer den bereits geschilderten, im Funktionsprinzip begründeten Vorteile von Magnetfeldgebern bietet die erfindungsgemäße Lösung zusätzlich den Vorzug, den Bau eines stabförmigen Magnetfeldgebers mit einem äußerst niedrigen Störspannungspegel zu ermöglichen. Der noch vorhandene Störspannungspegel entspricht im wesentlichen der fertigungstechnisch bedingten, sog. ohmschen Nullkomponenten des Hallgenerators. Aber auch dieser ist bei der erfindungsgemäß gewählten Anordnung kompensierbar, indem der Hallgenerator magnetisch vorgespannt wird, was bei der erfindungsgemäßen Lösung auf besonders einfache Weise dadurch erzielt werden kann, daß der Hallgenerator gegenüber der Zone minimaler magnetischer Induktion versetzt angeordnet wird. Die erfindungsgemäße Lösung wird somit der gestellten Aufgabe in vollem Umfang gerecht.

Ein Magnetfeldgeber gemäß der Erfindung ist jedoch, was einen weiteren Vorteil darstellt, nicht nur dort anwendbar, wo Induktionsgeber bisher nicht einsetzbar waren, er ist auch indem durch die Erfindung die gleiche Geberarchitektur gewählt werden kann, ohne weiteres anstelle eines Induktionsgebers einsetzbar, und zwar ebenfalls drehstellungsunabhängig, d. h. er kann durch Einschrauben befestigt werden. Außerdem ist vorteilhaft, daß die Justierung des Gebers sowohl außerhalb des Gebergehäuses als auch durch eine an sich gut beherrschbare, mechanische Bewegung zwischen dem Ringmagneten und der Leiterplatte vorgenommen werden kann und somit auch eine Eignung für die Großserienfertigung gegeben ist.

Im folgenden sei die Erfindung anhand der beigefügten Zeichnungen näher erläutert. Es zeigen:
FIGUR 1 eine Prinzipdarstellung eines erfindungsgemäßen Magnetfeldgebers mit einem axial magnetisierten Magneten sowie des bei offenem Magnetkreis herrschenden Magnetfeldes,
FIGUREN 2, 3 und 4 verschiedene Felddarstellungen bei einem durch ein ferromagnetisches Element gestörten Magnetkreis gemäß FIGUR 1,
FIGUR 5 eine Ansicht eines gemäß der Erfindung ausgerüsteten, einbaufähigen Magnetfeldgebers mit zugeordneter, ferromagnetischer Taktscheibe,
FIGUR 6 eine Teilansicht des Magnetfeldgebers gemäß FIGUR 5,
FIGUR 7 ein Blockschaltbild betreffend die Stromversorgung und die Signalverarbeitung des Hallgenerators,
FIGUR 8 ein Oszillogramm der Signalspannung eines Hallgenerators, welcher in einem dem Stand der Technik entsprechenden Magnetfeldgeber angeordnet ist,
FIGUR 9 ein Oszillogramm der Signalspannung eines Hallgenerators, welcher gemäß der Erfindung angeordnet ist,

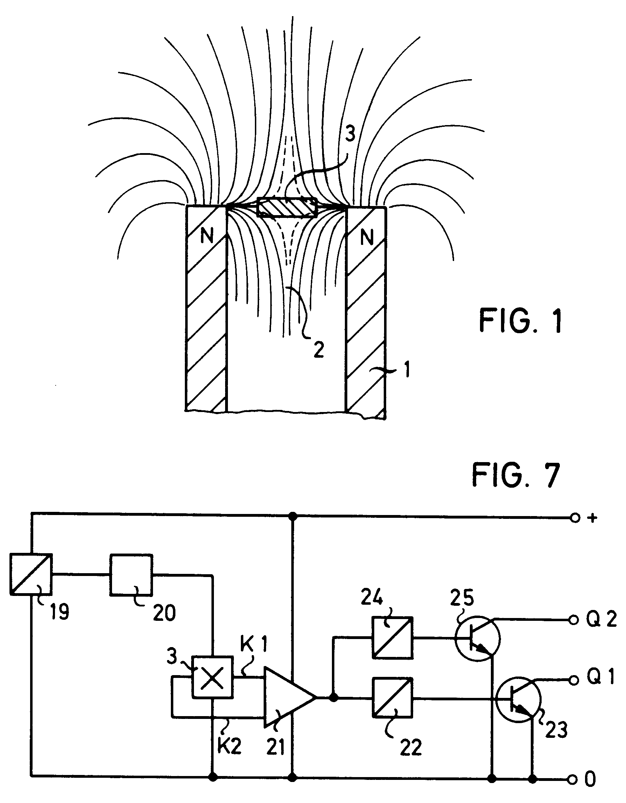

FIGUR 1o ein Oszillogramm der Signalspannung am Ausgang des dem erfindungsgemäß angeordneten Hallgenerator nachgeschalteten Differenzverstärkers,

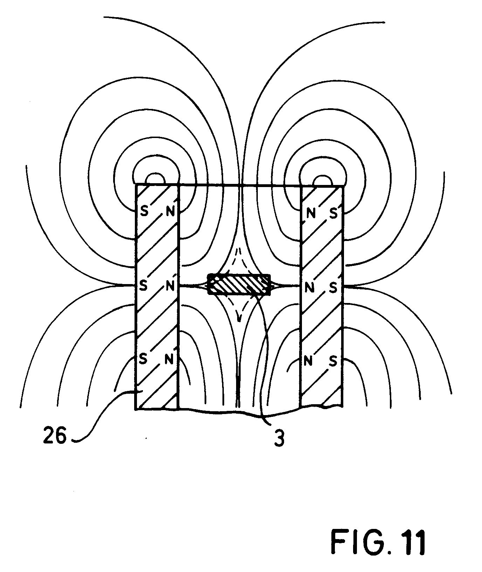

FIGUR 11 eine Prinzipdarstellung eines Magnetfeldgebers mit einem radial magnetisierten Magneten.

Wie FIGUR 1 zeigt, besteht bei einem axial magnetisierten Ringmagneten 1, vorzugsweise einem hohlzylindrischen Magneten, durch Feldverdrängung im Bereich der Magnetachse ein rotationssymmetrischer Raum 2 relativ geringen magnetischen Potentials bzw. relativ geringer magnetischer Induktion. In der Nähe der Pole des Magneten ergibt sich eine radiale Aufweitung des Raumes 2 und eine Zone, innerhalb der die magnetische Induktion gegen Null geht. Ein Hallgenerator 3 ist nun - bezogen auf den Ringmagneten 1 - erfindungsgemäß derart positioniert, daß er sich genau an der Stelle befindet, wo die magnetische Induktion bei ungestörtem Magnetkreis ein Minimum aufweist.

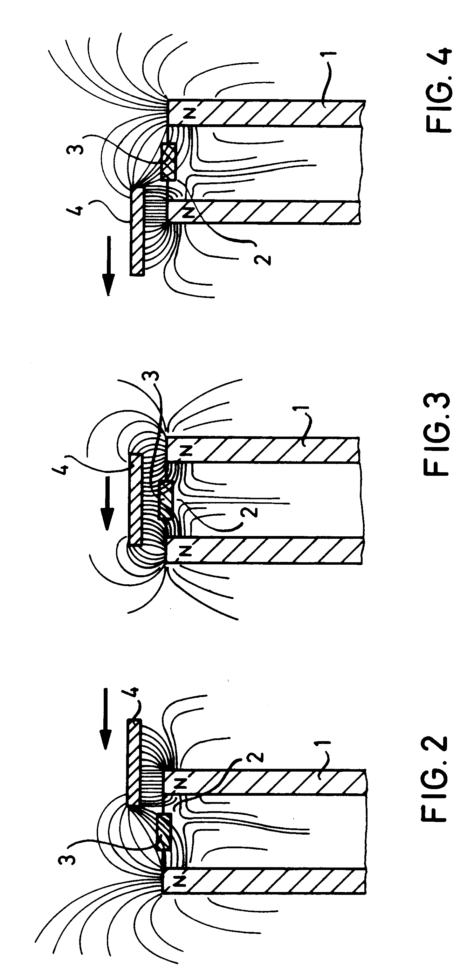

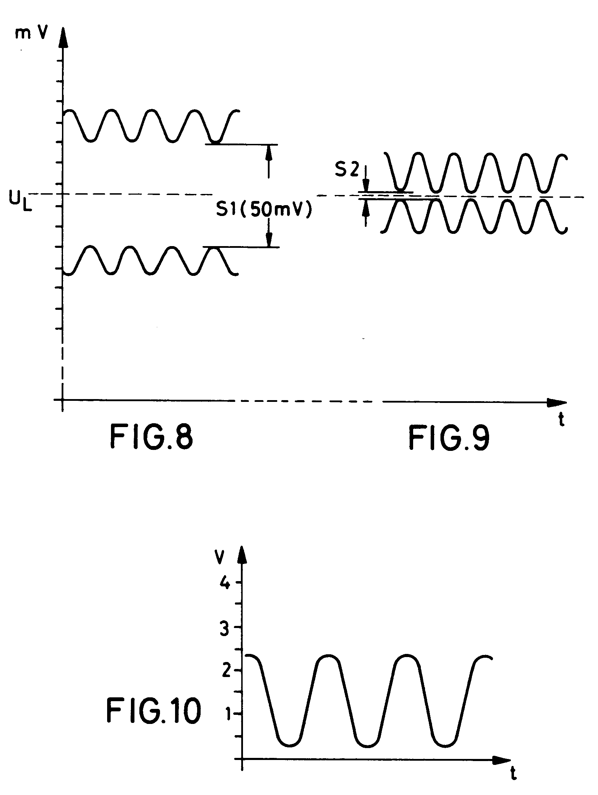

Wird der Magnetkreis gemäß FIGUR 1 durch ein ferromagnetisches Element 4 gestört, so verursacht die Sammelwirkung des ferromagnetischen Elementes 4 eine Verzerrung des Magnetfeldes bzw. eine Verlagerung und Verformung des feldneutralen bzw. feldfreien "Raumes" 2 und bewirkt bei einer Bewegung des ferromagnetischen Elementes 4 in Pfeilrichtung bis zu der in FIGUR 3 gezeigten Stellung eine zunehmende magnetische Durchflutung des Hallgenerators 3 und gleichzeitig eine Zunahme der für die Hallspannung entscheidenden Komponente der magnetischen Induktion in dessen Achsrichtung. Bei der Weiterbewegung des ferromagnetischen Elementes 4 in die in FIGUR 4 gezeigte Stellung wird das Feld des Magneten zwar "mitgeschleppt", die wirksame Durchflutung im Hallgenerator 3 nimmt jedoch zunehmend ab, bis letztlich das Feld wieder in seine in FIGUR 1 dargestellte Ausgangslage zurückspringt. Den jeweiligen Potentialverlauf an den Ausgängen des Hallgenerators 3 zeigt das Oszillogramm FIGUR 9.

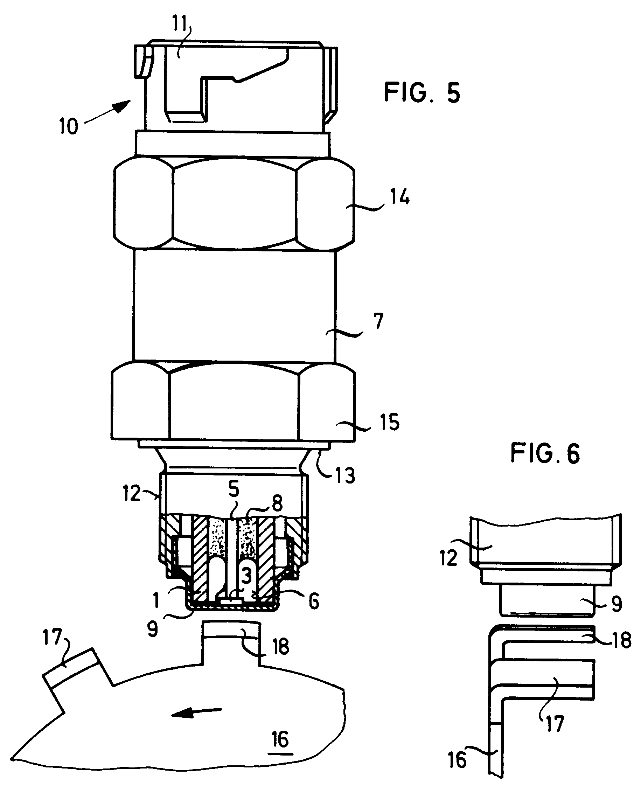

Wie aus FIGUR 5, die ein Ausführungsbeispiel eines einbaufähigen Magnetfeldgebers zeigt, ersichtlich ist, ist der Hallgenerator 3 an der Stirnseite eines an einer Leiterplatte 5 ausgebildeten Ansatzes angeordnet, welcher die in die zylindrische Öffnung 6 des Ringmagneten 1 eingreift. Ferner trägt die Leiterplatte 5, die in einem als Schraubstutzen ausgebildeten hülsenförmigen Gebergehäuse 7 gehaltert und in diesem schwingungsfest vergossen ist, in an sich bekannter Weise die signalformenden und -verstärkenden elektrischen Bauelemente des Magnetfeldgebers. Die Verbindung des Ringmagneten 1 mit der Leiterplatte 5 erfolgt außerhalb des Gehäuses 7, nachdem die Positionierung des Hallgenerators 3 im "feldfreien Raum" 2 des Ringmagneten 1 vorgenommen ist, beispielsweise durch einen geeigneten Kleber 8. Meßkopfseitig ist das Gebergehäuse 7 mittels einer magnetisch nicht leitenden Kappe 9 abgeschlossen; an der Gegenseite ist ein Steckersockel 1o befestigt, an welchem Renkanschlußmittel 11 angeformt sind, die, was nicht dargestellt ist, einer mit dem anzuschließenden Stecker zusammenwirkenden Überwurfmutter zugeordnet sind.

Der Vollständigkeit halber sei noch erwähnt, daß ein an dem Gebergehäuse 7 ausgebildetes Gewinde 12 dem Befestigen des Magnetfeldgebers beispielsweise am Getriebegehäuse eines Kraftfahrzeuges dient, wobei eine ringförmige Fläche 13 als Anschlagsfläche wirksam ist, während zwei Sechskantkränze 14 und 15 für das Ansetzen eines Montagewerkzeuges, beispielsweise eines Steckschlüssels vorgesehen sind. Getriebeseitig ist dem Meßobjekt eine ferromagnetische Taktscheibe 16 zugeordnet, an der mit dem Magnetfeldgeber zusammenwirkende Stege - zwei sind mit 17 und 18 bezeichnet - angewinkelt ausgebildet sind.

Das Blockschaltbild FIGUR 7 zeigt, daß für den Betrieb des Hallgenerators 3 in an sich bekannter Weise ein Referenzspannungsgeber 19 und eine Konstantstromquelle 2o vorgesehen sind und daß die beiden Signalkanäle K1 und K2 des Hallgenerators 3 mit den Eingängen eines Differenzverstärkers 21 verknüpft sind. Dem Ausgang des Differenzverstärkers 21 ist ein Impulsformer 22 nachgeschaltet, der mittels eines Transistors 23 von einer bei Q1 anschließbaren ersten Übertragungsleitung entkoppelt ist. Parallel zum Impulsformer 22 ist ein weiterer Impulsformer 24 geschaltet, der zum Zwecke einer Signalübertragungskontrolle über einen Koppeltransistor 25 ein gegenphasiges Signal an einen Anschlußpunkt Q2 einer zweiten Übertragungsleitung legt.

Die Gegenüberstellung der in geringem Maße idealisierten Oszillogramme der Signalspannungen (FIGUREN 8 und 9), welche an den Ausgängen K1 und K2 der einerseits gemäß dem Stand der Technik, andererseits gemäß der Erfindung angeordneten Hallgeneratoren meßbar sind, zeigt deutlich das mit der erfindungsgemäßen Anordnung erzielbare Nutz-/Störspannungs-Verhältnis. Mit UL ist die Leerlaufspannung der Hallgeneratoren bezeichnet, mit S1 und S2 die erheblich differierenden Störsignale. Der Vollständigkeit halber ist mit FIGUR 10 auch der Spannungsverlauf am Ausgang des Differenzverstärkers 21 gegenübergestellt.

Die FIGUR 11 zeigt eine Variante der erfindungsgemäßen Anordnung des Hallgenerators 3 innerhalb eines radial magnetisierten Ringmagneten 26.

## Patentansprüche

1. Magnetfeldgeber mit einem Permanentmagneten und einem Hallgenerator,
dadurch gekennzeichnet,
daß als Permanentmagnet ein Ringmagnet (1) vorgesehen ist und daß der an sich scheibenförmige Hallgenerator (3) der Öffnung des Ringmagneten (1) derart zugeordnet ist, daß eine gedachte, rechtwinklig zur Scheibenebene stehende Mittelachse des Hallgenerators (3) und die geometrische Achse des Ringmagneten (1) im wesentlichen zusammenfallen und der Hallgenerator (3) bei offenem Magnetkreis in einem durch Feldverdrängung innerhalb des Ringmagneten (1) gegebenen Raum (2) minimaler magnetischer Induktion angeordnet ist.

2. Magnetfeldgeber nach Anspruch 1,
dadurch gekennzeichnet,
daß an einer die elektrischen Bauelemente des Gebers tragenden Leiterplatte (5) ein in die Öffnung des Ringmagneten (1) einführbarer Ansatz ausgebildet ist,
daß der Hallgenerator (3) stirnseitig an dem in den Ringmagneten (1) eingreifenden Ansatz der Leiterplatte (5) angeordnet ist und
daß der Ringmagnet (1) auf dem Ansatz der Leiterplatte (3) fixiert ist.

3. Magnetfeldgeber nach Anspruch 1,
dadurch gekennzeichnet,
daß der Ringmagnet (1) axial magnetisiert ist und
daß der Hallgenerator (3) einer Stirnseite des Ringmagneten (1) zugeordnet ist.

4. Magnetfeldgeber nach Anspruch 1,
dadurch gekennzeichnet,
daß der Ringmagnet (26) radial magnetisiert ist und
daß der Hallgenerator (3) im Zentrum des Ringmagneten (26) positioniert ist.

## Claims

1. Magnetic field transmitter, having a permanent magnet and a Hall generator, characterized in that an annular magnet (1) is provided as a permanent magnet, and in that the Hall generator (3), which is disc-shaped per se, is associated with the opening of the annular magnet (1) such that an imaginary centre axis, situated at right angles to the disc plane, of the Hall generator (3) and the geometric axis of the annular magnet (1) substantially coincide and the Hall generator (3) is arranged, with an open magnetic circuit, in a space (2), existing as a result of field displacement within the annular magnet (1), of minimum magnetic induction.

2. Magnetic field transmitter according to Claim 1, characterized in that an attachment which may be introduced into the opening of the annular magnet (1) is constructed on a conductor plate (5) carrying the electrical components of the transmitter, in that the Hall generator (3) is arranged on the end side on the attachment of the conductor plate (5) which penetrates into the annular magnet (1), and in that the annular magnet (1) is fixed to the attachment of the conductor plate (3).

3. Magnetic field transmitter according to Claim 1, characterized in that the annular magnet (1) is axially magnetized, and in that the Hall generator (3) is associated with an end side of the annular magnet (1).

4. Magnetic field transmitter according to Claim 1, characterized in that the annular magnet (26) is radially magnetized, and in that the Hall generator (3) is positioned in the centre of the annular magnet (26).

## Revendications

1. Capteur de champ magnétique avec un aimant permanent et un générateur Hall,
caractérisé par le fait
que, comme aimant permanent, il est prévu un aimant annulaire (1) et que le générateur Hall (3) revêtant en soi la forme d'un disque est associé à l ouverture d'un aimant annulaire (1) de telle sorte qu'un axe médian imaginaire du générateur Hall (3) situé perpendiculairement à l'axe du disque et l'axe géométrique de l'aimant annulaire (1) coïncident pour l:essentiel et que le générateur Hall (3) est disposé, avec un circuit magnétique ouvert, dans un espace (2) d'induction magnétique minimale donné par décalage du champ à l'intérieur de l'aimant annulaire (1).

2. Capteur de champ magnétique selon la revendication 1,
caractérisé par le fait
que, sur une plaquette à circuits imprimés (5) portant les composants électriques du capteur, est formée une saillie pouvant être introduite dans l'ouverture de l'aimant annulaire (1),
que le générateur Hall (3) est disposé, du côté frontal, sur la saillie s'engageant dans l'aimant annulaire (1) de la plaquette à circuits imprimés (5) et
que l'aimant annulaire (1) est fixé sur la saillie de la plaquette à circuits imprimés (3).

3. Capteur de champ magnétique selon la revendication 1,
caractérisé par le fait
que l'aimant annulaire (1) est magnétisé dans le sens axial et que le générateur Hall (3) est associé à une face frontale de l'aimant annulaire (1).

4. Capteur de champ magnétique selon la revendication 1,
caractérisé par le fait
que l'aimant annulaire (26) est magnétisé dans le sens radial et
que le générateur Hall (3) est placé au centre de l'aimant annulaire (26).
